# FASCICULE DE BREVET EUROPEEN

(11) **EP 2 748 913 B1**
(45) Date de publication et mention de la délivrance du brevet: **21.06.2017**
(21) Numéro de dépôt: 12744054.3
(22) Date de dépôt: 05.07.2012
(51) Int. Cl.: H02K 1/16, H02K 15/02

(54) **PROCEDE D'ASSEMBLAGE DE CULASSE DE STATOR ET CULASSE CORRESPONDANTE**
VERFAHREN ZUR MONTAGE EINES STÄNDERJOCHS UND ENTSPRECHENDES STÄNDERJOCH
METHOD FOR ASSEMBLING A STATOR YOKE, AND CORRESPONDING YOKE

(30) Priorité: 23.08.2011 FR 1157469
(43) Date de publication de la demande: 02.07.2014
(73) Titulaire: Renault S.A.S., 92100 Boulogne-Billancourt (FR)
(72) Inventeur: DESHARNAIS, Sébastien, 78310 Maurepas (FR)
(86) Numéro de dépôt international: PCT/FR2012/051587
(87) Numéro de publication internationale: WO 2013/026966

(56) Documents cités:
- EP-A2- 0 236 690
- DE-A1- 19 934 858
- JP-A- 10 271 716
- JP-A- 2002 374 642
- JP-A- 2005 027 437
- US-A1- 2001 030 486

## Description

La présente invention se rapporte de manière générale au domaine de l'électrotechnique et concerne plus précisément la fabrication d'un stator de machine électrique.

Les stators de machines électriques sont classiquement assemblés par empilage de paquets de tôles, chaque tôle ayant été préalablement découpée selon le schéma d'une coupe radiale du stator à assembler.

Une autre méthode, appelée technique du « slinky », permet de réaliser des stators de machines électriques à des coûts très faibles avec l'avantage de limiter fortement le taux de chutes, c'est-à-dire la quantité de matière non utilisée lors de la fabrication. Pour fabriquer un stator selon cette méthode, on découpe un seul ruban statorique de tôle, comportant une succession de dents, puis on enroule ce ruban en hélice sur lui-même, par contrainte mécanique à froid. Cette tôle enroulée sur elle-même est ensuite comprimée de manière fixe, formant ainsi la culasse du stator. Avec cette méthode il est donc possible, lors de la phase de découpe en ruban, de découper les dents d'un stator en formant les encoches d'un autre stator, et ainsi d'économiser beaucoup de tôle.

Cependant cette technique dite du « slinky » présente des inconvénients. En effet, le circuit magnétique d'un stator assemblé par cette technique, c'est-à-dire la culasse de ce stator, étant exposée à de fortes contraintes de flexion, les pertes fer par hystérésis sont fortement accrues par rapport à ce qu'elles seraient par un assemblage classique du stator. De plus avec cette technique, l'épaisseur de la culasse du stator doit être inférieure à dix pour cent du diamètre extérieure du stator afin de pouvoir enrouler le ruban statorique et le plier pour former le stator. Cette technique est donc limitée à des machines électriques à faible puissance.

La demande de brevet US20050073210 présente un procédé de fabrication d'un stator dans lequel on utilise la technique dite du « slinky », mais pour la composition d'un circuit magnétique simplifié constitué d'un fin cylindre en tôle. En effet dans cette demande, on s'affranchit des inconvénients en termes d'intervalles de tolérance liés aux dents du stator, en remplaçant ces dents par une couronne en plastique comportant des séparateurs, qui s'encapsule sur le circuit magnétique simplifié et sur laquelle on enroule un bobinage. Ce procédé nécessite néanmoins une chaîne de fabrication complexe et ne résout pas le problème des fortes pertes par hystérésis dues aux contraintes de flexion sur le circuit magnétique simplifié.

La demande de brevet JP2002374642 décrit un procédé de fabrication d'un stator à encoches fermées, par imbrication d'une couronne de dents, formée par enroulement en spirale d'un ruban de tôle laminée, et d'une couronne extérieure également formée par enroulement en spirale d'un ruban de tôle laminée.

La demande de brevet DE19934858 décrit également un procédé de fabrication d'un stator à encoches fermées, dans lequel deux couronnes formées de rubans de tôle en spirale sont imbriquées l'une dans l'autre.

La demande de brevet EP0236690 décrit un procédé de fabrication d'une machine électrique dans laquelle le stator est formé par enroulement de plusieurs couches de rubans de tôle laminée.

Un des buts de l'invention est de remédier à au moins une partie des inconvénients de la technique antérieure en fournissant un procédé d'assemblage de la culasse d'un stator peu coûteux et une culasse de stator associée constituant un circuit magnétique ayant peu de pertes et de bonnes performances.

A cette fin, l'invention propose un procédé d'assemblage de la culasse d'un stator à dents par enroulement de tôle en hélice, comprenant les étapes de :
- découpe d'un premier ruban de tôle comportant une répétition de motifs liés à leurs bases par de minces ponts de matière, ledit premier ruban de tôle étant en acier à grains orientés,
- découpe d'un deuxième ruban de tôle comportant une répétition de motifs dentés liés à leurs bases par de minces ponts de matière, ledit deuxième ruban de tôle étant en acier à grains non orientés,
- enroulement en hélice du premier ruban pour former une couronne extérieure de la culasse,
- enroulement en hélice du deuxième ruban pour former une couronne intérieure de la culasse,
- et imbrication de la couronne intérieure dans la couronne extérieure.

Grâce à l'invention, les deux rubans de tôle ainsi découpés peuvent se plier et s'enrouler en hélice en n'exposant qu'un minimum de tôle à des contraintes de flexion, ces contraintes étant essentiellement supportées par les ponts de matière. Ainsi les pertes par hystérésis du circuit magnétique du stator sont fortement diminuées par rapport à un stator assemblé avec un seul ruban statorique. Les performances magnétiques de la culasse de stator produite sont augmentées grâce l'utilisation d'acier à grains orientés pour le premier ruban de tôle et à l'utilisation d'acier à grains non orientés pour le deuxième ruban de tôle.

Avantageusement, ledit procédé comporte de plus une étape de chauffage d'au moins une partie des ponts de matière respectivement du premier ou du deuxième ruban lors de l'étape d'enroulement en hélice respectivement du premier ruban ou du deuxième ruban.

Cette étape supplémentaire permet de diminuer les contraintes sur les ponts de matière lors de l'étape d'enroulement du premier ruban ou du deuxième ruban.

Préférentiellement, ladite étape de chauffage utilise un laser. Le laser permet en effet un chauffage très localisé et peut être utilisé pour un chauffage de pièces à une très grande cadence.

Avantageusement, ledit procédé comporte une étape de vernissage d'au moins une partie desdits ponts de matière après ladite étape de chauffage. Cette étape supplémentaire permet d'éviter les courts-circuits entre les différentes couches du premier ou du deuxième ruban enroulé sur lui-même, le chauffage des ponts de matière risquant d'endommager le vernis existant avant l'étape d'enroulement du premier ou du deuxième ruban.

L'invention concerne aussi une culasse de stator assemblée de rubans de tôles enroulés en hélice, ladite culasse comportant une première couronne comportant une répétition de motifs liés à leurs bases par de minces ponts de matière, et une deuxième couronne imbriquée dans la première couronne et comportant une répétition de motifs dentés liés à leurs bases par de minces ponts de matière, ladite première couronne étant en acier à grains orientés et ladite deuxième couronne étant en acier à grains non orientés.

Cette culasse de stator, réalisée par la méthode dite de « slinky » mais utilisant au moins deux rubans de tôle de motifs liés à leurs bases par de minces ponts de matière, utilise le concept du procédé selon l'invention et présente donc des avantages analogues à ceux du procédé selon l'invention.

La nature des aciers utilisés permet d'augmenter les performances magnétiques de la culasse du stator. En effet, le champ magnétique est essentiellement circonférentiel à l'extérieur de la culasse et donc plus facilement guidé par de l'acier à grains orientés, tandis qu'au niveau des dents du stator et au niveau des jointures entre ces dents et la couronne externe de la culasse, une fraction importante du champ change de direction et est donc plus facilement guidée par de l'acier à grains non orientés.

Selon une autre caractéristique de la culasse de stator selon l'invention, ladite deuxième couronne est imbriquée dans la première couronne sans interstices d'entrefer entre la première couronne et la deuxième couronne, grâce à une forme complémentaire d'au moins une partie des motifs de la deuxième couronne avec au moins une partie des motifs de la première couronne.

Cette caractéristique permet de ne pas introduire d'entrefer parasite qui générerait des bruits acoustiques et réduirait les performances du stator.

Avantageusement, les motifs de la première couronne et les motifs de la deuxième couronne ont une base sensiblement triangulaire.

Le fait pour la première et la deuxième couronne d'avoir des bases de formes triangulaires permet une découpe simple de ces formes en limitant les chutes. En effet avec de telles formes, plusieurs couronnes de plusieurs stators peuvent être découpées sur un même ruban de tôle par un positionnement astucieux de leurs motifs.

Selon une autre caractéristique avantageuse de la culasse du stator selon l'invention, au moins une partie des motifs de la deuxième couronne est liée à des motifs de la première couronne par des attaches aptes à résister à des efforts radiaux.

Préférentiellement, lesdites attaches sont en forme de queue d'aronde. Cette forme en queue d'aronde permet de minimiser le taux de chutes lors des étapes de découpe.

D'autres caractéristiques et avantages apparaîtront à la lecture d'un mode de réalisation préféré décrit en référence aux figures dans lesquelles :
- la figure 1 représente des étapes du procédé d'assemblage selon l'invention,
- la figure 2 représente un mode de réalisation de découpe d'un premier ruban de tôle selon une étape du procédé d'assemblage selon l'invention,
- la figure 3 représente un mode de réalisation de découpe d'un deuxième ruban de tôle selon une autre étape du procédé d'assemblage selon l'invention,
- la figure 4 représente un mode de réalisation d'une culasse de stator selon l'invention,
- la figure 5 représente des variantes de réalisation de dents d'une culasse de stator selon l'invention,
- la figure 6 représente un mode de réalisation de découpe de ces variantes de réalisation de dents d'une culasse de stator selon l'invention.

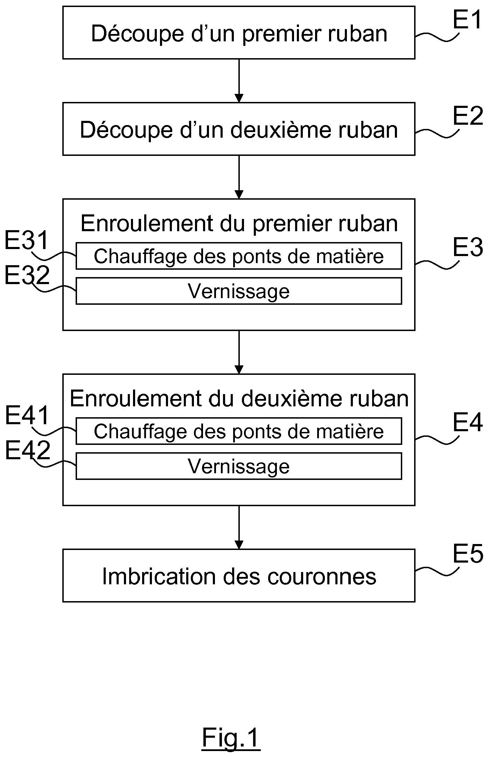

Selon un mode de réalisation préféré du procédé d'assemblage de la culasse d'un stator selon l'invention, celui-ci comporte des étapes E1 à E5 représentées sous forme la forme d'un algorithme sur la **figure 1****.**

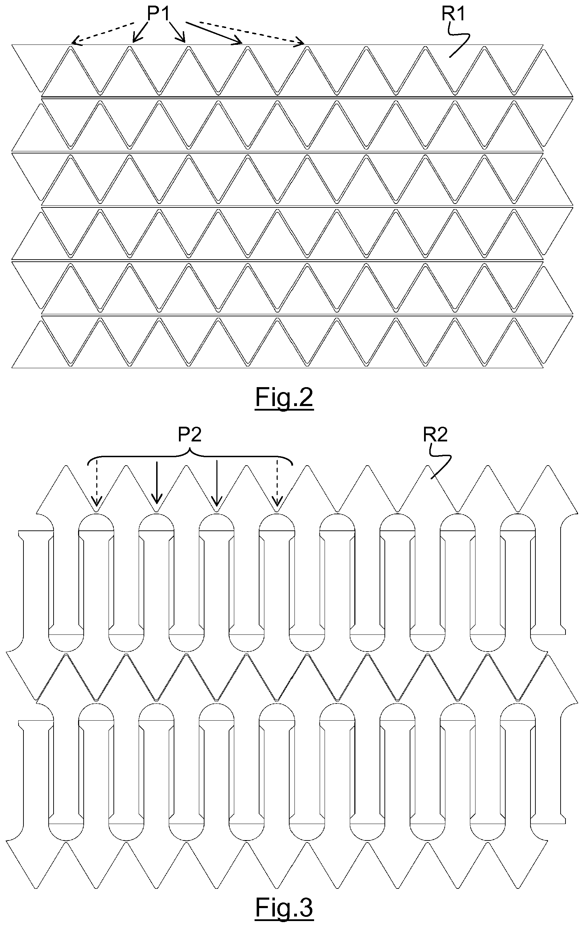

L'étape E1 est la découpe d'un premier ruban de tôle R1, représenté sur la **figure 2****,** comportant une répétition de motifs liés à leurs bases par de minces ponts de matière P1.

Dans ce mode de réalisation, ces motifs sont triangulaires ce qui permet de découper plusieurs rubans du même motif de manière imbriquée et donc d'économiser de la tôle, comme représenté sur la **figure 1****.** Cependant il est également possible d'utiliser d'autres formes, par exemple sinusoïdales.

Il est à noter que « mince » dans cette demande s'entend relativement à la taille du motif. Par exemple les ponts de matière P1 ont une largeur de l'ordre de l'épaisseur de la tôle du ruban R1.

Ce ruban R1 est en acier à grains orientés, afin de guider le champ magnétique de manière optimale au niveau de la périphérie de la culasse de stator réalisée selon l'invention.

L'étape E2 est la découpe d'un deuxième ruban de tôle R2, représenté sur la **figure 3****,** comportant une répétition de motifs dentés liés à leurs bases par de minces ponts de matière P2. Dans ce mode de réalisation, ces motifs sont des dents ayant une assise triangulaire ce qui permet de découper plusieurs rubans de ce motif de manière imbriquée et donc d'économiser de la tôle, comme représenté sur la **figure 3****.** Cependant il est également possible d'utiliser d'autres formes pour les assises des dents de ces rubans, par exemple une forme sinusoïdale. Ce ruban R2 est en acier à grains non orientés, afin de guider le champ magnétique de manière optimale au niveau des dents de la culasse de stator réalisée selon l'invention.

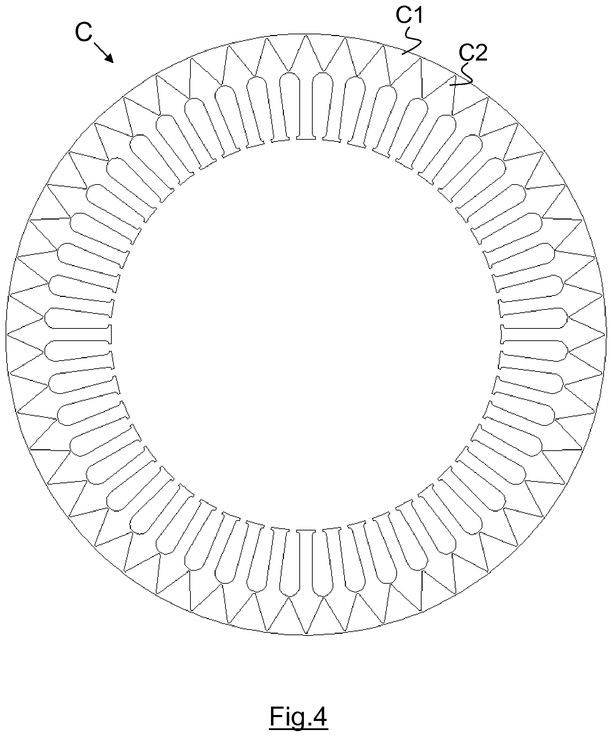

L'étape E3 est l'enroulement en hélice du premier ruban R1 pour former une couronne extérieure C1, représentée à la **figure 4****,** de la culasse C du stator réalisée selon l'invention. Grâce aux minces ponts de matières P1 liant les motifs du ruban R1, cet enroulement en hélice selon la technique dite de « slinky » minimise les contraintes sur la tôle enroulée. Ces contraintes sont essentiellement supportées par les ponts de matière P1.

Afin de réduire encore les contraintes lors de cette étape E3, et donc de réduire les pertes fer par hystérésis liées à ces contraintes, on chauffe ces ponts de matière P1 pour les amener à une température proche de la température de fusion de la tôle constituant le ruban R1, ou au moins une température de transition de phase de cette tôle, dans une sous-étape E31 de chauffage d'au moins une partie des ponts de matière P1. Ainsi la tôle sera ramollie au point qu'elle fléchira facilement et n'accumulera pas de contrainte résiduelle susceptible de perturber sa matrice cristalline en se refroidissant. Cette sous-étape E31 de chauffage est préférentiellement effectuée par un chauffage laser lors de l'étape d'enroulement E3. Ainsi le chauffage est localisé, limité dans le temps et permet de travailler à une très grande cadence. Cependant il est possible d'utiliser d'autres moyens de chauffage des ponts de matière P1, par exemple un chauffage par flamme, ou un chauffage plasma, ou encore un chauffage par induction.

L'apport de chaleur sur les ponts de matière P1 risquant de brûler le vernis préexistant sur le ruban R1 et donc de conduire à des courts-circuits entre les différentes couches du ruban R1 une fois enroulé, la sous-étape E31 est suivie d'une sous-étape E32 de vernissage d'au moins une partie des ponts de matière P1 ayant été chauffés lors de la sous-étape E31. Cette sous-étape E32 a lieu lors de l'étape d'enroulement E3.

Il est à noter que les sous-étapes E31 et E32 sont optionnelles. Par exemple en variante, en fonction du compromis entre pertes par hystérésis dues à des contraintes résiduelles et pertes par courants de Foucault dues à des courts-circuits, on choisit de supprimer ces sous-étapes, qui ont l'inconvénient d'ajouter du coût à la fabrication de la culasse de stator. Dans une autre variante, on choisit de garder la sous-étape E31 de chauffage mais de supprimer l'étape E32 de vernissage, si on juge difficile de vernir les ponts de matière P1 au fur et à mesure de leur chauffage, lors de l'étape d'enroulement E3.

A la fin de cette étape E3 d'enroulement, le ruban R1 enroulé est fixé et forme la couronne extérieure C1 représentée sur la **figure 4****.**

L'étape E4 est l'enroulement en hélice du deuxième ruban R2 pour former une couronne intérieure C2, représentée à la **figure 4****,** de la culasse C du stator réalisée selon l'invention. Cet enroulement en hélice se fait de manière similaire à l'étape E3 d'enroulement du premier ruban R1 et comporte également une sous-étape optionnelle E41 de chauffage d'au moins une partie des ponts de matière P2 et une sous-étape optionnelle E42 de vernissage d'au moins une partie des ponts de matière P2 ayant été chauffés lors de la sous-étape E41.

A la fin de cette étape E4 d'enroulement, le ruban R2 enroulé est fixé et forme la couronne extérieure C2 représentée sur la **figure 4****.**

Il est à noter également que l'ordre des étapes E1 à E4 n'est pas figé. Il est en effet par exemple possible de découper et enrouler le premier ruban R1 avant de découper et enrouler le deuxième ruban R2.

Enfin l'étape E5 est l'imbrication de la couronne intérieure C2 dans la couronne extérieure C1 pour former la culasse C de stator représentée à la **figure 4****.** Cette imbrication se fait par glissement de la couronne intérieure C2 dans la couronne extérieure C1. On maintient par exemple dans cette étape E5 la couronne intérieure C2 à basse température afin qu'elle se contracte et la couronne extérieure C1 à une plus haute température afin qu'elle se dilate. Ainsi le jeu entre ces deux couronnes est faible lors de cette étape E5, ce qui la facilite. Après cette étape E5, les températures des deux couronnes s'égalisent et reviennent à la température ambiante. Le jeu entre les deux couronnes consiste alors en un léger serrage qui assure la tenue de l'ensemble.

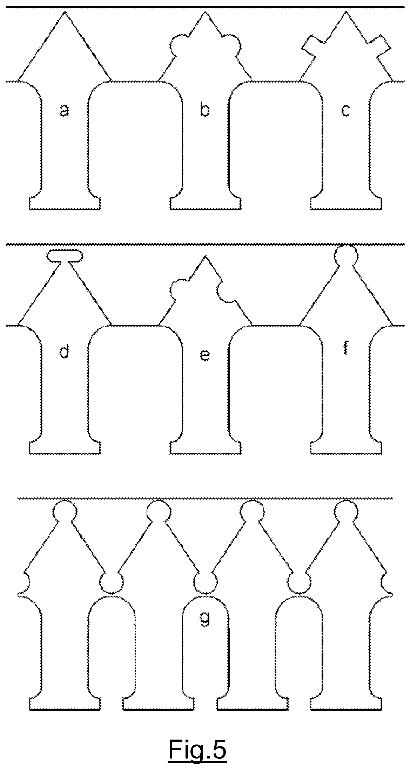

On remarque qu'afin de garder un excellent contact entre les deux couronnes C1 et C2, les assises triangulaires des dents du ruban R2 s'imbriquent parfaitement dans les encoches triangulaires formées par les motifs du ruban R1. De plus d'autres modes de réalisation sont envisageables dans lesquels plus de deux couronnes sont enroulées puis imbriquées les unes dans les autres pour former la culasse du stator. En variante une couronne intermédiaire est par exemple interposée entre la couronne la plus extérieure C1 et la couronne intérieure C2. La notion de couronne extérieure au sens de l'invention est donc relative puisque cette couronne intermédiaire devient dans cette variante également une couronne extérieure par rapport à la couronne intérieure C2. Dans une autre variante si une couronne intermédiaire comporte des dents séparées les unes des autres comme représenté à la **figure 5****,** alors cette couronne intermédiaire avec ces dents forme une couronne intérieure au sens de l'invention.

Il est cependant à noter que la forme triangulaire des bases des motifs des rubans R1 et R2 n'est pas toujours suffisante pour maintenir l'assemblage de la culasse du stator, une fois celui-ci en fonctionnement, s'il est soumis à d'importants efforts radiaux, qui sont en général dix fois plus importants que les efforts tangentiels générant le couple de la machine électrique utilisant le stator. Dans ces conditions il est préférable de modifier légèrement la forme triangulaire des bases des motifs des rubans R1 et R2 selon les exemples a, b, c, d, e, f et g représentés à la **figure 5****,** c'est-à-dire en les munissant d'attaches du type queue d'aronde. Ces formes permettent d'éviter que les dents du stator ne s'arrachent.

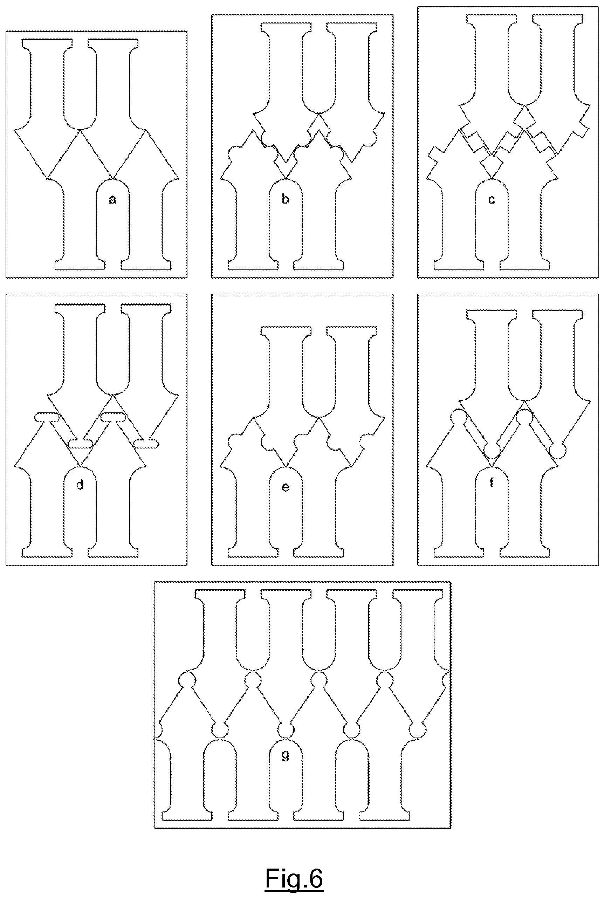

Parmi ces motifs a, b, c, d, e, f et g, les motifs e et g sont avantageux car ils permettent une découpe avec un moindre taux de chute, comme représenté sur la **figure 6****.**

## Revendications

1. Procédé d'assemblage de la culasse (C) d'un stator à dents par enroulement de tôle en hélice, comprenant les étapes de :
- découpe (E1) d'un premier ruban (R1) de tôle comportant une répétition de motifs liés à leurs bases par de minces ponts de matière (P1),
- découpe (E2) d'un deuxième ruban (R2) de tôle comportant une répétition de motifs dentés liés à leurs bases par de minces ponts de matière (P2),
- enroulement (E3) en hélice du premier ruban (R1) pour former une couronne extérieure (C1) de la culasse (C),
- enroulement (E4) en hélice du deuxième ruban (R2) pour former une couronne intérieure (C2) de la culasse(C),
- et imbrication (E5) de la couronne intérieure (C2) dans la couronne extérieure (C1),
ledit procédé étant **caractérisé en ce que** ledit premier ruban de tôle est en acier à grains orientés et ledit deuxième ruban de tôle est en acier à grains non orientés.

2. Procédé d'assemblage selon la revendication 1, **caractérisé en ce qu'**il comporte une étape (E31, E41) de chauffage d'au moins une partie des ponts de matière (P1, P2) respectivement du premier ou du deuxième ruban (R1, R2) lors de l'étape (E3, E4) d'enroulement en hélice respectivement du premier ruban (R1) ou du deuxième ruban (R2).

3. Procédé d'assemblage selon la revendication 2, caractérisé en ce ladite étape (E31, E41) de chauffage utilise un laser.

4. Procédé d'assemblage selon la revendication 2 ou 3, **caractérisé en ce qu'**il comporte une étape (E32, E42) de vernissage d'au moins une partie desdits ponts de matière (P1, P2) après ladite étape (E31, E41) de chauffage.

5. Culasse (C) de stator assemblée de rubans (R1, R2) de tôles enroulés en hélice, ladite culasse (C) comportant une première couronne (C1) comportant une répétition de motifs liés à leurs bases par de minces ponts de matière (P1), et une deuxième couronne (C2) imbriquée dans la première couronne (C1) et comportant une répétition de motifs dentés liés à leurs bases par de minces ponts de matière (P2), **caractérisée en ce que** ladite première couronne (C1) est en acier à grains orientés et **en ce que** ladite deuxième couronne (C2) est en acier à grains non orientés.

6. Culasse (C) selon la revendication 5, **caractérisée en ce que** ladite deuxième couronne (C2) est imbriquée dans la première couronne (C1) sans interstices d'entrefer entre la première couronne (C1) et la deuxième couronne (C2), grâce à une forme complémentaire d'au moins une partie des motifs de la deuxième couronne (C2) avec au moins une partie des motifs de la première couronne (C1).

7. Culasse (C) selon l'une quelconque des revendications 5 à 6, **caractérisée en ce que** les motifs de la première couronne (C1) et les motifs de la deuxième couronne(C2) ont une base sensiblement triangulaire.

8. Culasse (C) selon l'une quelconque des revendications 5 à 7, **caractérisée en ce que** au moins une partie des motifs de la deuxième couronne (C2) est liée à des motifs de la première couronne (C1) par des attaches aptes à résister à des efforts radiaux.

9. Culasse (C) selon la revendication 8, **caractérisée en ce que** lesdites attaches sont en forme de queue d'aronde.

## Patentansprüche

1. Verfahren zum Zusammenbau des Jochs (C) eines gezahnten Stators durch wendelförmiges Wickeln eines Blechs, das die folgenden Schritte enthält:
- Ausschneiden (E1) eines ersten Blechbands (R1), das eine Wiederholung von Mustern aufweist, die an ihren Basen durch dünne Materialbrücken (P1) verbunden sind,
- Ausschneiden (E2) eines zweiten Blechbands (R2), das eine Wiederholung von gezahnten Mustern aufweist, die an ihren Basen durch dünne Materialbrücken (P2) verbunden sind,
- wendelförmiges Wickeln (E3) des ersten Bands (R1), um einen äußeren Kranz (C1) des Jochs (C) zu bilden,
- wendelförmiges Wickeln (E4) des zweiten Bands (R2), um einen inneren Kranz (C2) des Jochs (C) zu bilden,
- und Verschachtelung (E5) des inneren Kranzes (C2) in den äußeren Kranz (C1),
wobei das Verfahren **dadurch gekennzeichnet ist, dass** das erste Blechband aus Stahl mit ausgerichteten Körnern und das zweite Blechband aus Stahl mit nicht ausgerichteten Körnern ist.

2. Zusammenbauverfahren nach Anspruch 1, **dadurch gekennzeichnet, dass** es einen Schritt (E31, E41) des Erwärmens mindestens eines Teils der Materialbrücken (P1, P2) des ersten bzw. zweiten Bands (R1, R2) im Schritt (E3, E4) des wendelförmigen Wickelns des ersten Bands (R1) bzw. des zweiten Bands (R2) aufweist.

3. Zusammenbauverfahren nach Anspruch 2, **dadurch gekennzeichnet, dass** der Erwärmungsschritt (E31, E41) einen Laser verwendet.

4. Zusammenbauverfahren nach Anspruch 2 oder 3, **dadurch gekennzeichnet, dass** es einen Schritt (E32, E42) des Lackierens mindestens eines Teils der Materialbrücken (P1, P2) nach dem Erwärmungsschritt (E31, E41) aufweist.

5. Joch (C) eines Stators, das aus Bändern (R1, R2) wendelförmig gewickelter Bleche zusammengebaut wird, wobei das Joch (C) einen ersten Kranz (C1), der eine Wiederholung von Mustern, die an ihren Basen durch dünne Materialbrücken (P1) verbunden sind, und einen zweiten Kranz (C2) aufweist, der in den ersten Kranz (C1) verschachtelt ist und eine Wiederholung von gezahnten Mustern aufweist, die an ihren Basen durch dünne Materialbrücken (P2) verbunden sind, **dadurch gekennzeichnet, dass** der erste Kranz (C1) aus Stahl mit ausgerichteten Körnern und der zweite Kranz (C2) aus Stahl mit nicht ausgerichteten Körnern ist.

6. Joch (C) nach Anspruch 5, **dadurch gekennzeichnet, dass** der zweite Kranz (C2) aufgrund einer komplementären Form mindestens eines Teils der Muster des zweiten Kranzes (C2) zu mindestens einem Teil der Muster des ersten Kranzes (C1) ohne Luftspalt-Zwischenräume zwischen dem ersten Kranz (C1) und dem zweiten Kranz (C2) in den ersten Kranz (C1) verschachtelt ist.

7. Joch (C) nach einem der Ansprüche 5 bis 6, **dadurch gekennzeichnet, dass** die Muster des ersten Kranzes (C1) und die Muster des zweiten Kranzes (C2) eine im Wesentlichen dreieckige Basis haben.

8. Joch (C) nach einem der Ansprüche 5 bis 7, **dadurch gekennzeichnet, dass** mindestens ein Teil der Muster des zweiten Kranzes (C2) mit Mustern des ersten Kranzes (C1) durch Befestigungen verbunden ist, die radialen Kräften widerstehen können.

9. Joch (C) nach Anspruch 8, **dadurch gekennzeichnet, dass** die Befestigungen eine Schwalbenschwanzform haben.

## Claims

1. Method for assembling the yoke (C) of a toothed stator by helical steel plate winding, comprising the steps of:
- cutting (E1) a first strip (R1) of steel plate comprising a repetition of patterns linked at their bases by thin material bridges (P1),
- cutting (E2) a second strip (R2) of steel plate comprising a repetition of toothed patterns linked at their bases by thin material bridges (P2),
- helically winding (E3) the first strip (R1) to form an outer crown ring (C1) of the yoke (C),
- helically winding (E4) the second strip (R2) to form an inner crown ring (C2) of the yoke (C),
- and nesting (E5) the inner crown ring (C2) in the outer crown ring (C1),
said method being **characterized in that** said first strip of steel plate is made of oriented grain steel and said second strip of steel plate is made of non-oriented grain steel.

2. Assembly method according to Claim 1, **characterized in that** it includes a step (E31, E41) of heating at least part of the material bridges (P1, P2) respectively of the first or second strip (R1, R2) in the step (E3, E4) of helically winding respectively the first strip (R1) or the second strip (R2).

3. Assembly method according to Claim 2, **characterized in that** said heating step (E31, E41) uses a laser.

4. Assembly method according to Claim 2 or 3, **characterized in that** it includes a step (E32, E42) of enamelling at least part of said material bridges (P1, P2) after said heating step (E31, E41).

5. Stator yoke (C) assembled from strips (R1, R2) of helically wound steel plates, said yoke (C) comprising a first crown ring (C1) comprising a repetition of patterns linked at their bases by thin material bridges (P1), and a second crown ring (C2) nested in the first crown ring (C1) and comprising a repetition of toothed patterns linked at their bases by thin material bridges (P2), **characterized in that** said first crown ring (C1) is made of oriented grain steel and **in that** said second crown ring (C2) is made of non-oriented grain steel.

6. Yoke (C) according to Claim 5, **characterized in that** said second crown ring (C2) is nested in the first crown ring (C1) without air gap interstices between the first crown ring (C1) and the second crown ring (C2), by virtue of a complementary form of at least some of the patterns of the second crown ring (C2) with at least some of the patterns of the first crown ring (C1).

7. Yoke (C) according to either one of Claims 5 or 6, **characterized in that** the patterns of the first crown ring (C1) and the patterns of the second crown ring (C2) have a substantially triangular base.

8. Yoke (C) according to any one of Claims 5 to 7, **characterized in that** at least some of the patterns of the second crown ring (C2) are linked to patterns of the first crown ring (C1) by ties capable of withstanding radial forces.

9. Yoke (C) according to Claim 8, **characterized in that** said ties are in dovetail form.
